(19) Europäisches Patentamt
European Patent Office
Office européen des brevets

(11) **EP 4 478 628 A1**

(12) **EUROPEAN PATENT APPLICATION**
published in accordance with Art. 153(4) EPC

(43) Date of publication:
**18.12.2024 Bulletin 2024/51**

(21) Application number: **24761477.9**

(22) Date of filing: **05.01.2024**

(51) International Patent Classification (IPC):
*H04B 7/185* (2006.01)

(86) International application number:
**PCT/CN2024/070927**

(87) International publication number:
**WO 2024/187928 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.03.2023 CN 202310288193**

(71) Applicant: HUAWEI TECHNOLOGIES CO., LTD.
Shenzhen, Guangdong 518129 (CN)

(72) Inventors:
• TIAN, Wei
  Shenzhen
  Guangdong 518129 (CN)
• LI, Zhaoyang
  Shenzhen
  Guangdong 518129 (CN)
• ZHANG, Shiming
  Shenzhen
  Guangdong 518129 (CN)
• WANG, Dongxu
  Shenzhen
  Guangdong 518129 (CN)

(74) Representative: Epping - Hermann - Fischer
Patentanwaltsgesellschaft mbH
Schloßschmidstraße 5
80639 München (DE)

(54) **SATELLITE MESSAGE TRANSMISSION METHOD AND SYSTEM, AND TERMINAL DEVICE**

(57) Embodiments of this application provide a satellite message transmission method, a system, and a terminal device, so that an identifier of a BeiDou satellite message may be indicated in a BeiDou short packet, and occupation of packet space may be reduced. The identifier of the BeiDou satellite message may facilitate association of relationships among a plurality of messages including the BeiDou satellite message. In the method, a first terminal device generates an identifier of a satellite message based on timestamp information in response to an operation indicating to send the satellite message, and then sends the identifier of the satellite message together with message content of the satellite message. Compared with generating the identifier of the satellite message by using a general technology, generating the identifier of the satellite message based on the timestamp information may occupy less packet space.

```
┌─────────────────────┐                        ┌───────────┐
│ First terminal device │                        │ Satellite │
└─────────────────────┘                        └───────────┘
           │                                          │
  ┌────────────────────────────────────────────┐    │
  │ 701: Generate a first message identifier     │    │
  │ based on first timestamp information in       │    │
  │ response to a first operation on a first      │    │
  │ interface, where the first operation indicates│    │
  │ the first terminal device to send a satellite │    │
  │ message                                       │    │
  └────────────────────────────────────────────┘    │
           │                                          │
           │  ┌──────────────────────────────────┐   │
           │  │ 702: Send a first satellite message│  │
           │  │ to the satellite, where the first  │──┼──►
           │  │ satellite message includes the     │   │
           │  │ first message identifier and first │   │
           │  │ message content                    │   │
           │  └──────────────────────────────────┘   │
           │                                          │
```

FIG. 7

**Description**

**CROSS-REFERENCE TO RELATED APPLICATION**

This application claims priority to Chinese Patent Application No. 202310288193.4, filed with the China National Intellectual Property Administration on March 15, 2023 and entitled "SATELLITE MESSAGE TRANSMISSION METHOD, SYSTEM, AND TERMINAL DEVICE", which is incorporated herein by reference in its entirety.

**TECHNICAL FIELD**

This application relates to the field of terminal technologies, and in particular, to a satellite message transmission method, a system, and a terminal device.

**BACKGROUND**

With development and progress of technologies, functions of a terminal device are gradually improved and enriched. A mobile phone is used as an example. Currently, more mobile phones have a BeiDou short packet communication service function, and can provide communication assurance for a user in a network-free environment.

Due to a rate limitation of satellite communication, a message capacity of messages sent and received by using a satellite is currently limited to some extent. For example, in some implementations, a BeiDou short packet can transmit content of a maximum of 400 bits (bits). In addition, a message recipient number, location information, and information content entered by the user occupy a message capacity of the BeiDou short packet. Consequently, there is a large limitation on information content that can be actually entered by the user in the BeiDou short packet.

**SUMMARY**

This application provides a satellite message transmission method, a system, and a terminal device, so that an identifier of a BeiDou satellite message may be indicated in a BeiDou short packet, and occupation of packet space may be reduced. The identifier of the BeiDou satellite message may facilitate association of relationships among a plurality of messages including the BeiDou satellite message.

According to a first aspect, an embodiment of this application provides a satellite message transmission method. In the method, a first terminal device generates a first message identifier based on first timestamp information in response to a first operation on a first interface, where the first operation indicates the first terminal device to send a satellite message. The first terminal device sends a first satellite message to a satellite, where the first satellite message includes the first message identifier and first message content.

In the method, an identifier (identity document, ID) of a BeiDou satellite message is generated based on timestamp information, so that a message capacity of a BeiDou short packet occupied by the ID of the BeiDou satellite message may be reduced. In addition, a plurality of messages may be associated by using the ID of the BeiDou satellite message, so that a user may more intuitively determine a relationship among messages.

In a possible design, the generating a first message identifier based on first timestamp information includes: performing modulo processing on the first timestamp information by using first preset duration, to obtain a modulo result; and generating the first message identifier based on the modulo result. For example, the first preset duration may be preset maximum storage duration of the satellite message, for example, may be seven days. In some embodiments, the generating the first message identifier based on the modulo result includes: using the modulo result as the first message identifier.

In this design, compared with an ID of a BeiDou message generated by using a general technology, the ID of the BeiDou satellite message generated by using the timestamp information may reduce occupation of a message capacity of the BeiDou short packet.

In a possible design, the method further includes: The first terminal device receives a second satellite message sent by the satellite, where the second satellite message includes a second message identifier and second message content, the second message identifier is the same as the first message identifier, and the second message content is reply content of the first message content. In some embodiments, the second message identifier may be understood as the first message identifier. When a communication peer device of the first terminal device replies to the first terminal device with a message after receiving the first message identifier and the first message content that are sent by the first terminal device, the first message identifier is carried in the reply message, so that the message identifier may indicate that the reply message is a reply message for the first message content. The first terminal device displays a second interface based on the second satellite message, where the second message content and the first message content are displayed in an associated manner in the second interface. It may be understood that, when the satellite message is transmitted, the satellite message carries encoded message content and message identifier. After receiving the second satellite message, the terminal device decodes the encoded message content and message identifier, and determines an association relationship among messages based on the decoded message identifier, to display the decoded message content. Although encoding and decoding are not described in embodiments of this application, it may be understood that the message may be transmitted after being encoded, and may be decoded after being received.

In this design, the first terminal device performs matching, based on the message identifier carried in the received satellite message, with the message identifier of the message sent by the first terminal device. In this way, an association relationship among messages may be accurately obtained, so that messages may be displayed in an associated manner, and the user may more intuitively determine a relationship among messages.

In a possible design, before the first terminal device receives a second satellite message sent by the satellite, the method further includes: The first terminal device sends a first request message to the satellite in response to a second operation, where the first request message is used to request to obtain a satellite message to be received by the first terminal device.

In this design, the first terminal device may actively query the satellite, to obtain the satellite message to be received, so that more scenarios in the state in which a network disconnection is implemented can be extended, improving communication assurance for a user.

In a possible design, the first timestamp information is current coordinated universal time (universal time coordinated, UTC) obtained by the first terminal device in response to the first operation.

In this design, the ID of the BeiDou satellite message may be generated more accurately based on the UTC, to avoid a problem such as repetition of the ID of the BeiDou satellite message.

Based on the foregoing possible designs, the first satellite message is the BeiDou satellite message. According to a second aspect, an embodiment of this application further provides another satellite message transmission method. A first terminal device generates a first message identifier based on first timestamp information in response to a first operation on a first interface, where the first operation indicates the first terminal device to send a satellite message. The first terminal device generates a first transmission code based on the first timestamp information, where the first transmission code is used to obtain the first message identifier. The first terminal device sends a first satellite message to a satellite, where the first satellite message includes the first transmission code and first message content.

In the method, an ID of a BeiDou satellite message and a transmission code are generated based on timestamp information, and the transmission code is carried in the satellite message. The ID of the BeiDou satellite message may also be indirectly indicated by using the transmission code, so that occupation of a message capacity of a BeiDou short packet may be reduced. In addition, a plurality of messages may be associated by using the ID of the BeiDou satellite message, so that a user may more intuitively determine a relationship among messages.

In a possible design, the generating a first message identifier based on first timestamp information includes: performing modulo processing on the first timestamp information by using first preset duration, to obtain a first modulo result; and generating the first message identifier based on the first modulo result. In a possible design, the first preset duration is greater than or equal to preset storage duration of the satellite message. For example, the first preset duration may be preset maximum storage duration of the satellite message, for example, may be seven days. In some embodiments, the generating the first message identifier based on the first modulo result includes: using the first modulo result as the first message identifier.

In a possible design, the generating a first transmission code based on the first timestamp information includes: performing modulo processing on the first timestamp information by using second preset duration, to obtain a second modulo result; and generating the first transmission code based on the second modulo result. In a possible design, the second preset duration is greater than or equal to maximum duration required for transmitting the satellite message from the first terminal device to a server. For example, the second preset duration may be maximum transmission duration required for sending the satellite message from the terminal device to the server for receiving, for example, may be four minutes. In some embodiments, the generating the first transmission code based on the second modulo result includes: using the second modulo result as the first transmission code.

In this design, the transmission code is generated by using the timestamp information, and the ID of the BeiDou satellite message is indirectly indicated by using the transmission code. Compared with an ID of a BeiDou message generated by using a general technology, this may reduce occupation of a message capacity of the BeiDou short packet.

In a possible design, the method further includes: The first terminal device receives a second satellite message sent by the satellite, where the second satellite message includes a second message identifier and second message content, the second message identifier is the same as the first message identifier, and the second message content is reply content of the first message content. The first terminal device displays a second interface based on the second satellite message, where the second message content and the first message content are displayed in an associated manner in the second interface.

In a possible design, before the first terminal device receives a second satellite message sent by the satellite, the method further includes: The first terminal device sends a first request message to the satellite in response to a second operation, where the first request message is used to request to obtain a satellite message to be received by the first terminal device.

In a possible design, the first timestamp information is current UTC obtained by the first terminal device in response to the first operation.

Based on the foregoing possible designs, the first satellite message is the BeiDou satellite message. According to a third aspect, an embodiment of this application further provides a satellite message transmission method. In the method, a server receives a first satellite message from a first terminal device by using a satellite, where the first satellite message includes a first transmission code and first message content, and the first transmission code is used to obtain first message identifier. The server obtains first timestamp information based on second timestamp information and the first transmission code, where the first timestamp is earlier than the second timestamp. The server obtains the first message identifier based on the first timestamp information. The server sends a first message to a second terminal device, where the first message includes the first message identifier and the first message content.

In the method, after the first transmission code is parsed out by the server from the satellite message, the server may determine, based on an encoding manner of the first transmission code, the first timestamp information corresponding to the generation of the first transmission code. Further, based on an encoding manner of the ID of the BeiDou satellite message, the server may obtain the ID of the BeiDou satellite message based on the first timestamp information in the same encoding manner. In this manner, in a scenario in which the ID of the BeiDou satellite message needs to be transmitted, occupation of a message capacity of a BeiDou short packet may be reduced. In a possible design, the method further includes: The server receives a second message sent by the second terminal device, where the second message includes a second message identifier and second message content, the second message identifier is the same as the first message identifier, and the second message content is reply content of the first message content. The server sends a second satellite message to the satellite, where the second satellite message includes the second message identifier and the second message content.

In a possible design, that the server obtains first timestamp information based on second timestamp information and the first transmission code includes: The server generates a second transmission code based on the second timestamp information. When it is determined that the second transmission code is the same as the first transmission code, it is determined that the first timestamp information is the second timestamp information. When it is determined that the second transmission code is different from the first transmission code, a transmission code is generated based on timestamp information that is earlier than the second timestamp information by M preset time intervals, until third timestamp information corresponding to a transmission code that is the same as the first transmission code is determined, and it is determined that the first timestamp information is the third timestamp information, where M is a positive integer sequentially obtained in ascending order, the preset time interval is less than or equal to first preset duration, and the first preset duration is preset transmission duration for sending the first satellite message from the first terminal device to the server for receiving.

In a possible design, the second timestamp information is current UTC obtained when the first satellite message is received by the server.

Based on the foregoing possible designs, the first satellite message is the BeiDou satellite message. According to a fourth aspect, an embodiment of this application further provides a terminal device. The terminal device includes a memory and one or more processors. The memory is configured to store computer program code, and the computer program code includes computer instructions. When the computer instructions are executed by the processor, the terminal device is enabled to perform the method performed by the first terminal device according to any one of the possible designs in the first aspect or the second aspect.

According to a fifth aspect, an embodiment of this application further provides a terminal device. The terminal device includes modules/units for performing the method according to any one of the possible designs in the first aspect or the second aspect. These modules/units may be implemented by hardware, or may be implemented by hardware by executing corresponding software.

In some embodiments, the terminal device may include a processing module and a communication module. The processing module may be configured to generate a first message identifier based on first timestamp information in response to a first operation on a first interface, where the first operation indicates a first terminal device to send a satellite message. The communication module may be configured to send a first satellite message to a satellite, where the first satellite message includes the first message identifier and first message content.

In some other embodiments, the terminal device may include a processing module and a communication module. The processing module may be configured to generate a first message identifier based on first timestamp information in response to a first operation on a first interface, where the first operation indicates the first terminal device to send a satellite message. The processing module is further configured to generate a first transmission code based on the first timestamp information, where the first transmission code is used to obtain the first message identifier. The communication module is configured to send a first satellite message to a satellite, where the first satellite message includes the first transmission code and first message content. According to a sixth aspect, an embodiment of this application further provides a server. The server includes a memory and one or more processors. The memory is configured to store computer program code, and the computer program code includes computer instructions. When the computer instructions are executed by the processor, the server is enabled to perform the method performed by the server according to any one of the possible designs in the third aspect.

According to a seventh aspect, an embodiment of this application further provides a server. The server includes modules/units for performing the method according to any one of the possible designs in the third aspect. These modules/units may be implemented by hardware, or may be implemented by hardware by executing corresponding software.

In some embodiments, the server may include a processing module and a communication module. The communication module is configured to receive a first satellite message from a first terminal device by using a satellite, where the first satellite message includes a first transmission code and first message content, and the first transmission code is used to obtain first message identifier. The processing module is configured to obtain first timestamp information based on second timestamp information and the first transmission code, where the first timestamp is earlier than the second timestamp. The processing module is further configured to obtain the first message identifier based on the first timestamp information. The communication module is further configured to send a first message to a second terminal device, where the first message includes the first message identifier and the first message content.

According to an eighth aspect, an embodiment of this application further provides a satellite message transmission system. The system may include at least the terminal device according to the fourth aspect and the server according to the sixth aspect.

According to a ninth aspect, a computer-readable storage medium is provided. The computer-readable medium stores a computer program (which may also be referred to as code or instructions). When the computer program runs on a computer, the computer is enabled to perform the method according to any one of the possible designs in the first aspect, the second aspect, or the third aspect.

According to a tenth aspect, a computer program product is provided. The computer program product includes a computer program (which may also be referred to as code or instructions). When the computer program runs, a computer is enabled to perform the method according to any one of the possible designs in the first aspect, the second aspect, or the third aspect.

According to an eleventh aspect, a graphical user interface on a terminal device is further provided. The terminal device has a display, one or more memories, and one or more processors. The one or more processors are configured to execute one or more computer programs stored in the one or more memories. The graphical user interface includes a graphical user interface displayed when the first terminal device performs any one of the possible implementations in the first aspect, the second aspect, or the third aspect in embodiments of this application.

According to a twelfth aspect, this application further provides a chip. The chip is configured to read a computer program stored in a memory, to perform the method performed by the terminal device according to any one of the foregoing aspects and the possible designs of the foregoing aspects.

According to a thirteenth aspect, this application further provides a chip system. The chip system includes a processor, configured to support a computer apparatus in implementing the method performed by the terminal device according to any one of the foregoing aspects and the possible designs of the foregoing aspects. In a possible design, the chip system further includes a memory. The memory is configured to store a program and data that are necessary for the computer apparatus. The chip system may include a chip, or may include a chip and another discrete component.

It should be noted that, for beneficial effects of the designs of the terminal device provided in the second aspect to the thirteenth aspect in embodiments of this application, refer to beneficial effects of any one of the possible designs in the first aspect to the third aspect. Details are not described herein again.

## BRIEF DESCRIPTION OF DRAWINGS

FIG. 1 is a schematic diagram of a hardware architecture of a terminal device according to an embodiment of this application;
FIG. 2 is a block diagram of a software system architecture of a terminal device according to an embodiment of this application;
FIG. 3 is a diagram of an application scenario to which a satellite message transmission method according to an embodiment of this application is applied;
FIG. 4A to FIG. 4D are a schematic diagram of an interface of a satellite message transmission method according to an embodiment of this application;
FIG. 5A and FIG. 5B are a first schematic flowchart of a satellite message transmission method according to an embodiment of this application;

FIG. 6A and FIG. 6B are a second schematic flowchart of a satellite message transmission method according to an embodiment of this application;

FIG. 7 is a third schematic flowchart of a satellite message transmission method according to an embodiment of this application; and

FIG. 8 is a fourth schematic flowchart of a satellite message transmission method according to an embodiment of this application.

## DESCRIPTION OF EMBODIMENTS

The following describes in detail embodiments of this application with reference to the accompanying drawings.

Embodiments of this application may be applied to the field of terminal technologies, and may be specifically applied to an application scenario relating to satellite short packet communication. In the following embodiments, an example in which a satellite short packet is a BeiDou short packet is used. Implementation of a BeiDou-related technology and function may depend on a satellite, satellite networking, or the like, to implement communication, services, and the like. Although development of terrestrial communication technologies can meet requirements of users in a large quantity of communication scenarios, full coverage of a terrestrial communication network cannot be implemented. Therefore, in some areas in which the terrestrial communication network does not exist or cannot exist, communication may be implemented based on a BeiDou technology, namely, a communication service function of a BeiDou packet (which may also be referred to as names such as a "BeiDou satellite message", a "BeiDou short message", a "BeiDou message", and a "satellite message", and may be used interchangeably in embodiments of this application). The function may implement communication by using a satellite or satellite networking.

In an optional embodiment, a transmitter device may send the BeiDou satellite message to a receiver device in a form of the BeiDou short packet. The receiver device may reply to the BeiDou satellite message by using an instant messaging technology or an operator network. Based on this, the transmitter device may further actively query, in a network disconnection state, a reply message through a BeiDou satellite channel; or may obtain, in a network connection state, a reply message through a long connection channel between the transmitter device and a server.

Due to limitations of factors such as use of the BeiDou satellite message and a resource, to improve accuracy of communication including the BeiDou satellite message, an identifier (identity document, ID) of the BeiDou satellite message may be carried in a message exchange process to associate a group of exchanged communication messages. Optionally, the group of communication messages including the BeiDou satellite message includes at least one BeiDou satellite message, and the reply message may be a BeiDou satellite message, or may not belong to a BeiDou satellite message. This is not limited in this application. It may be understood that the group of communication messages may be understood as reply messages of both the transmitter device and the receiver device for the communication after the transmitter device initiates communication.

However, due to a capacity limitation of the BeiDou short packet in satellite communication, for example, a maximum of 400 bits can be transmitted, adding any information to the BeiDou short packet may reduce information that can be actually carried in the BeiDou short packet. When a unique identifier generated by using a general technology is usually represented as a long (long) integer, and occupies 64 bits, a capacity of information that can be actually carried in the BeiDou short packet is reduced.

In view of this, an embodiment of this application provides a satellite message transmission method. In the method, a new solution for generating an ID of a BeiDou satellite message is provided. The ID of the BeiDou satellite message is generated based on a timestamp, so that space occupied by the ID of the BeiDou satellite message can be compressed. In this way, not only an association relationship among a plurality of messages may be determined by using the ID of the BeiDou satellite message, but also impact caused by occupation of a message capacity of the BeiDou short packet may be reduced.

Embodiments of this application may be applied to a terminal device that has a BeiDou short packet communication service function, such as a mobile phone, a PC, a tablet computer, a wearable device (for example, a watch or a band), a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), and a smart home device (for example, a smart television or a smart speaker). It may be understood that a specific type of the terminal device is not limited in embodiments of this application.

Embodiments of this application may be applied to a terminal device. An example embodiment includes but is not limited to a terminal device that carries HarmonyOS®, iOS®, Android®, Microsoft®, or another operating system. Alternatively, the portable terminal device may be another portable terminal device, for example, a laptop (Laptop) computer with a touch-sensitive surface (for example, a touch panel).

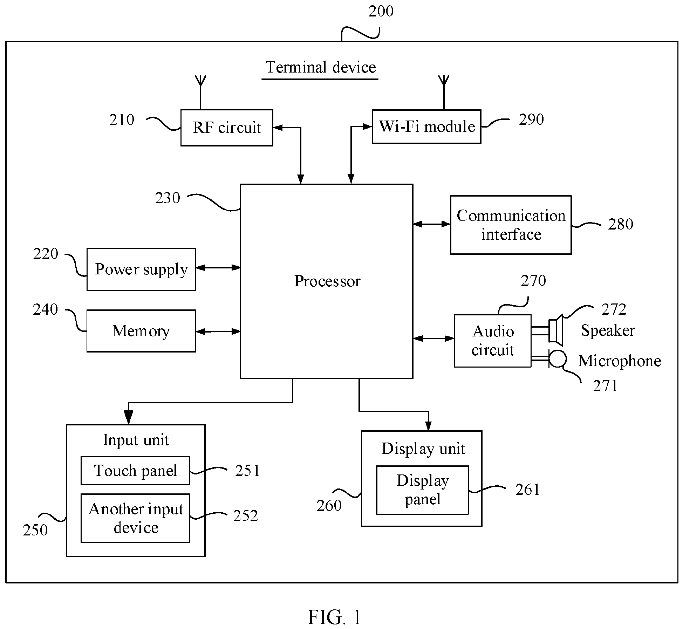

FIG. 1 is a schematic diagram of a hardware structure of a possible terminal device. The terminal device 200 includes components such as a radio frequency (radio frequency, RF) circuit 210, a power supply 220, a processor 230, a memory 240, an input unit 250, a display unit 260, an audio circuit 270, a communication interface 280, and a wireless fidelity (wireless fidelity, Wi-Fi) module 290. A person skilled in the art may understand that the hardware structure of the terminal device 200 shown in FIG. 1 does not constitute a limitation on the terminal device 200. The terminal device 200 provided in this embodiment of this application may include more or fewer components than those shown in the figure, may combine two or more components, or may have different component configurations. The various components shown in FIG. 1 may be implemented in hardware including one or more signal processing circuits and/or application-specific integrated circuits, software, or a combination of hardware and software.

The following specifically describes each component of the terminal device 200 with reference to FIG. 1.

The RF circuit 210 may be configured to receive and send data in a communication or call process. Particularly, after receiving downlink data from a base station, the RF circuit 210 sends the downlink data to the processor 230 for processing, and sends, to the base station, uplink data to be sent. Usually, the RF circuit 210 includes but is not limited to an antenna, at least one amplifier, a transceiver, a coupler, a low noise amplifier (low noise amplifier, LNA), a duplexer, and the like. In addition, the RF circuit 210 may further communicate with another device through a wireless communication network. The wireless communication may use any communication standard or protocol, including but not limited to a global system for mobile communications (global system for mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short message service, SMS), and the like.

The terminal device 200 may further implement a communication service and interact with another terminal device. Therefore, the terminal device 200 needs to have a data transmission function, that is, the terminal device 200 needs to include a communication module. FIG. 1 shows communication modules such as the RF circuit 210, the Wi-Fi module 290, and the communication interface 280. However, it may be understood that the terminal device 200 includes at least one of the foregoing components or another communication module (for example, a Bluetooth module) configured to implement communication, to transmit the data.

For example, when the terminal device 200 is a mobile phone, the terminal device 200 may include the RF circuit 210, and may further include the Wi-Fi module 290, or may include a Bluetooth module (not shown in FIG. 1). When the terminal device 200 is a computer, the terminal device 200 may include the communication interface 280, and may further include the Wi-Fi module 290, or may include a Bluetooth module (not shown in FIG. 1). When the terminal device 200 is a tablet computer, the terminal device 200 may include the Wi-Fi module, or may include a Bluetooth module (not shown in FIG. 1).

The Wi-Fi technology belongs to a short-range wireless transmission technology. The terminal device 200 may be connected to an access point (access point, AP) by using the Wi-Fi module 290, to implement access to a data network. The Wi-Fi module 290 may be configured to receive and send data in a communication process.

The terminal device 200 may be physically connected to another device by using the communication interface 280. Optionally, the communication interface 280 may be connected to a communication interface of the another device through a cable, to implement data transmission between the terminal device 200 and the another device.

The memory 240 may be configured to store a software program and a module. The processor 230 runs the software program and the module stored in the memory 240, to perform various function applications of the terminal device 200 and process data. Optionally, the memory 240 may mainly include a program storage region and a data storage region. The program storage region may store an operating system (mainly including software programs or modules separately corresponding to a kernel layer, a system layer, an application framework layer, an application layer, and the like). In addition, the memory 240 may include a high-speed random access memory, and may further include a non-volatile memory, for example, at least one magnetic disk storage device, a flash memory device, or another volatile solid-state storage device.

The input unit 250 may be configured to receive editing operations of multiple different types of data objects such as digital or character information entered by a user, and generate key signal input related to a user setting and function control on the terminal device 200. Optionally, the input unit 250 may include a touch panel 251 and another input device 252.

The touch panel 251, also referred to as a touchscreen, may collect a touch operation of the user on or near the touch panel 251 (for example, an operation of the user on or near the touch panel 251 by using any suitable object or accessory, for example, a finger or a stylus), and drive a corresponding connection apparatus according to a preset program. In embodiments of this application, the touch panel 251 may collect an operation of the user on a display panel 261, for example, a touch operation of the user in an interface displayed on the display panel 261 to reply to a BeiDou satellite message.

Optionally, the another input device 252 may include, but is not limited to, one or more of a physical keyboard, a functional button (for example, a volume control button or an on/off button), a trackball, a mouse, and a joystick.

The display unit 260 may be configured to display information content entered by the user or information content provided for the user, and various menus of the terminal device 200. The display unit 260 is a display system of the terminal device 200, and is configured to present an interface and implement human-computer interaction. The display unit 260 may include the display panel 261. Optionally, the display panel 261 may be configured in a form of a liquid crystal display (liquid crystal display, LCD), an organic light-emitting diode (organic light-emitting diode, OLED), or the like. In embodiments of this application, when the terminal device 200 is a receive end of the BeiDou satellite message, the display unit 260 may be configured to display the interface for the user, so that the user may view the received BeiDou satellite message by using the interface, and may further reply to the BeiDou satellite message by using the interface. Alternatively, when the terminal device 200 is the transmitter device of the BeiDou satellite message, the display unit 260 may be configured to display the interface for the user, so that the user may send the BeiDou satellite message by using the interface, and may further receive, by using the interface, the message replied by the receive end.

The processor 230 is a control center of the terminal device 200, is connected to the components through various interfaces and lines, and performs various functions of the terminal device 200 and data processing through running or executing the software program and/or the module stored in the memory 240 and invoking data stored in the memory 240. Therefore, a plurality of services of the terminal device 200 are implemented. In embodiments of this application, the processor 230 may be configured to implement the satellite message transmission method provided in embodiments of this application.

The terminal device 200 further includes the power supply 220 (such as a battery) configured to supply power to the components. Optionally, the power supply 220 may be logically connected to the processor 230 by using a power management system, to implement functions such as charging and discharging management and power consumption management by using the power management system.

As shown in FIG. 1, the terminal device 200 further includes the audio circuit 270, a microphone 271, and a speaker 272, and may provide an audio interface between the user and the terminal device 200. The audio circuit 270 may be configured to convert audio data into a signal that can be identified by the speaker 272, and transmit the signal to the speaker 272. The speaker 272 converts the signal into a sound signal for output. The microphone 271 is configured to: collect an external sound signal (for example, a sound of a person speaking, or another sound), convert the collected external sound signal into a signal that can be identified by the audio circuit 270, and send the signal to the audio circuit 270. The audio circuit 270 may further be configured to: convert the signal sent by the microphone 271 into audio data, and then output the audio data to the RF circuit 210 for sending to, for example, another terminal device, or output the audio data to the memory 240 for subsequent processing.

Although not shown, the terminal device 200 may further include a camera, at least one sensor, and the like. Details are not described herein again. The at least one sensor may include but is not limited to a pressure sensor, a barometric pressure sensor, an acceleration sensor, a distance sensor, a fingerprint sensor, a touch sensor, a temperature sensor, and the like.

An operating system (operating system, OS) in embodiments of this application is most basic system software running on the terminal device 200. A software system of the terminal device 200 may use a layered architecture, an event-driven architecture, a microkernel architecture, a micro service architecture, or a cloud architecture. In embodiments of this application, an operating system using a layered architecture is used as an example to describe a software system architecture of the terminal device 200.

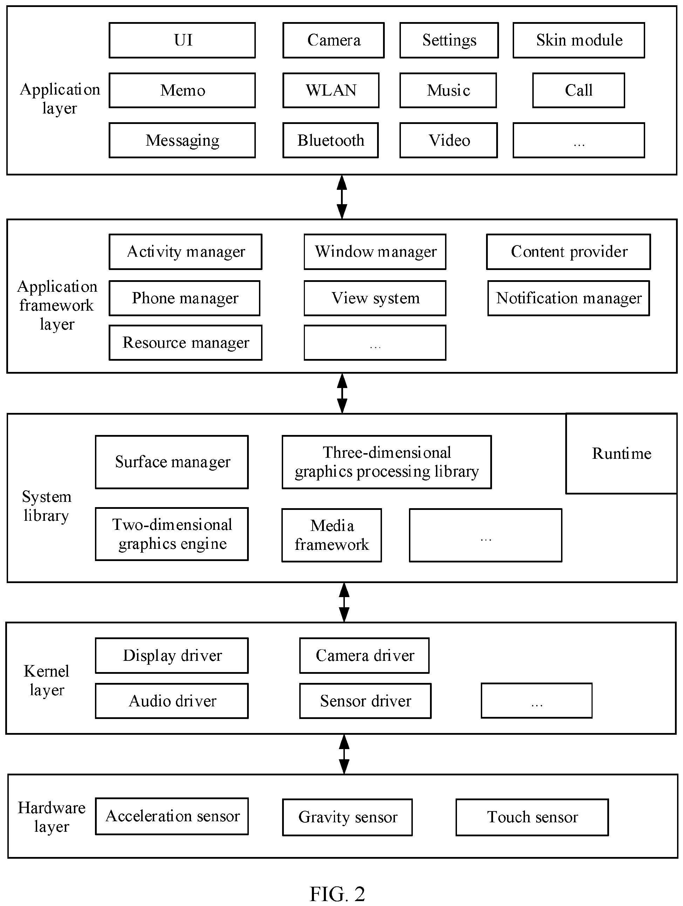

FIG. 2 is a block diagram of a software system architecture of a terminal device according to an embodiment of this application. As shown in FIG. 2, the software system architecture of the terminal device may be a layered architecture. For example, software may be divided into several layers, and each layer has a clear role and responsibility. The layers communicate with each other through a software interface. In some embodiments, the operating system is divided into five layers: an application layer, an application framework layer (framework, FWK), a runtime and system library, a kernel layer, and a hardware layer from top to bottom.

The application layer may include a series of application packages. As shown in FIG. 2, the application layer may include Camera, Settings, Skin module, User interface (user interface, UI), a third-party application, and the like. The third-party application may include a wireless local area network (wireless local area network, WLAN), music, a call, Bluetooth, a video, a memo, messaging, and the like. In embodiments of this application, attention may be paid to an instant messaging application (application, APP) (for example, a MeeTime APP) or a messaging APP that may be provided by the application layer. Sending and receiving of a BeiDou satellite message may be implemented in the instant messaging APP or the messaging APP. When the terminal device has no network service, the message may be sent in a form of a BeiDou short packet.

In a possible implementation, the application may be developed by using a Java language, and is completed by invoking an application programming interface (application programming interface, API) provided by an application framework layer. A developer may interact with a bottom layer (for example, the hardware layer or the kernel layer) of the operating system by using the application framework, to develop an application of the developer. The application framework layer mainly includes a series of services and management systems of the operating system.

The application framework layer provides an application programming interface and a programming framework for an application at the application layer. The application framework layer includes some predefined functions. As shown in FIG. 2, the application framework layer may include an activity manager, a window manager, a content provider, a view system, a phone manager, a resource manager, a notification manager, and the like.

The activity manager is configured to: manage a life cycle of each application, provide a common navigation rollback function, and provide an interactive interface for windows of all programs.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying a picture. The view system may be configured to construct an application. A display interface may include one or more views. For example, a display interface including a short packet service message notification icon may include a view for displaying text and a view for displaying a picture.

The phone manager is configured to provide a communication function for the terminal device, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message that may automatically disappear after a short pause without requiring user interaction. For example, the notification manager is configured to: notify download completion, provide a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, a prompt tone is made, the terminal device vibrates, or the indicator light flashes.

The runtime includes a core library and a virtual machine. The runtime is responsible for scheduling and management of the operating system.

The core library includes two parts: a performance function that needs to be invoked by a Java language and a core library of the operating system. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media framework (media framework), a three-dimensional graphics processing library (for example, OpenGL ES), and a two-dimensional graphics engine (for example, SGL).

The surface manager is configured to: manage a display subsystem and provide fusion of two-dimensional and three-dimensional layers for a plurality of applications.

The media framework supports playback and recording of a plurality of commonly used audio and video formats, static image files, and the like. The media framework may support a plurality of audio and video encoding formats such as MPEG-4, H.264, MP3, AAC, AMR, JPG, and PNG. The three-dimensional graphics processing library is configured to implement three-dimensional graphics drawing, image rendering, composition, layer processing, and the like.

The two-dimensional graphics engine is a drawing engine for two-dimensional drawing.

In some embodiments, the three-dimensional graphics processing library may be configured to draw a three-dimensional moving track image, and the two-dimensional graphics engine may be configured to draw a two-dimensional moving track image.

The kernel layer is a layer between hardware and software. The kernel layer includes at least a display driver, a camera driver, an audio driver, and a sensor driver.

The hardware layer may include various types of sensors, for example, an acceleration sensor, a gravity sensor, and a touch sensor.

Usually, the terminal device 200 may run a plurality of applications simultaneously. In a simple manner, one application may correspond to one process, and in a complex manner, one application may correspond to a plurality of processes. Each process has a process ID (process ID).

It should be understood that "at least one of the following pieces (items)" or a similar expression thereof in embodiments of this application indicates any combination of these items, including a singular item (piece) or any combination of plural items (pieces). For example, at least one of a, b, or c may indicate a, b, c, a and b, a and c, b and c, or a, b, and c, where a, b, and c may be singular or plural. "A plurality of" means two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

In addition, it should be understood that terms such as "first" and "second" in the description of this application are merely used for distinguishing and description, but should not be understood as indicating or implying relative importance, or should not be understood as indicating or implying a sequence.

It should be understood that a hardware structure of the terminal device may be as shown in FIG. 1, and a software system architecture may be as shown in FIG. 2. A software program and/or a module corresponding to the software system architecture of the terminal device may be stored in the memory 240. The processor 230 may run the software program and the application stored in the memory 240, to perform a procedure of the satellite message transmission method provided in embodiments of this application.

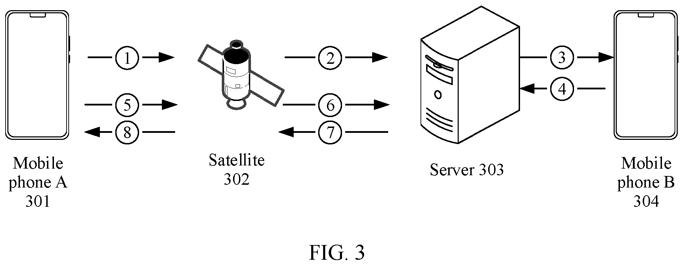

To facilitate understanding of the satellite message transmission method provided in this application, the following describes, with reference to content shown in FIG. 3 to FIG. 8, an implementation process of the method provided in this application.

FIG. 3 is a schematic diagram of an application scenario to which a satellite message transmission method according to an embodiment of this application is applied. The application scenario may include but is not limited to a mobile phone A 301, a satellite 302, a server 303, and a mobile phone B 304. Based on the application scenario shown in FIG. 3, a communication procedure related to a BeiDou satellite message is first described.

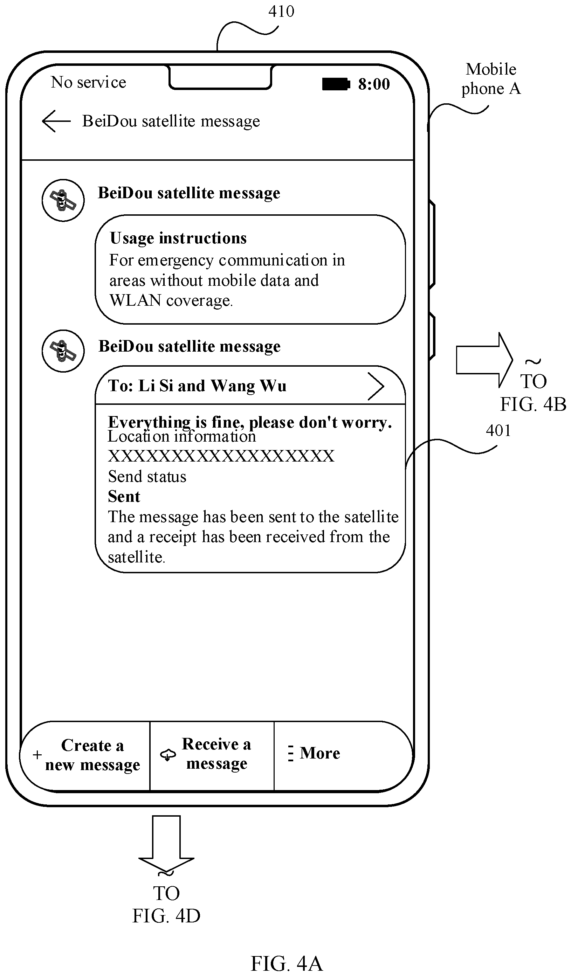

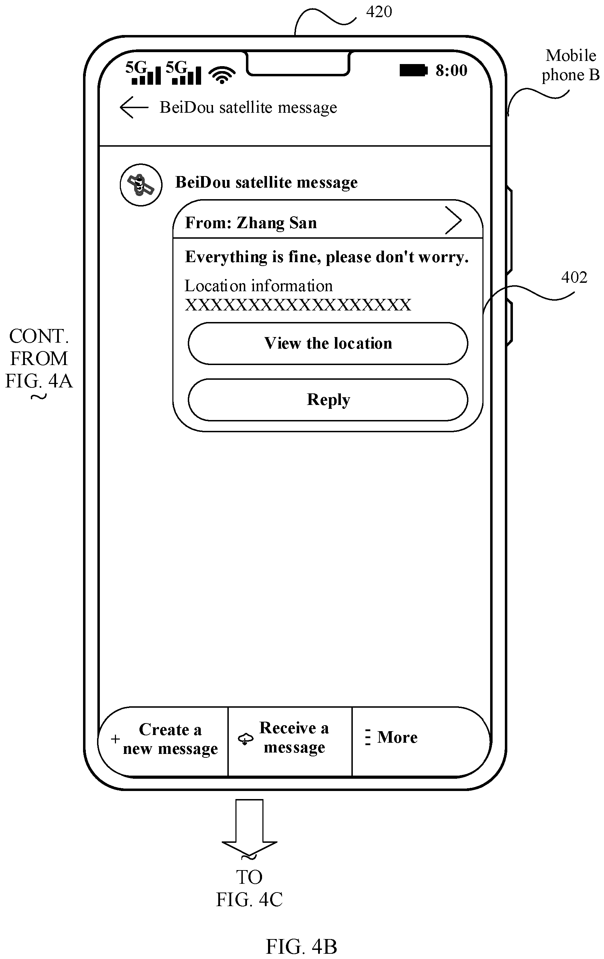

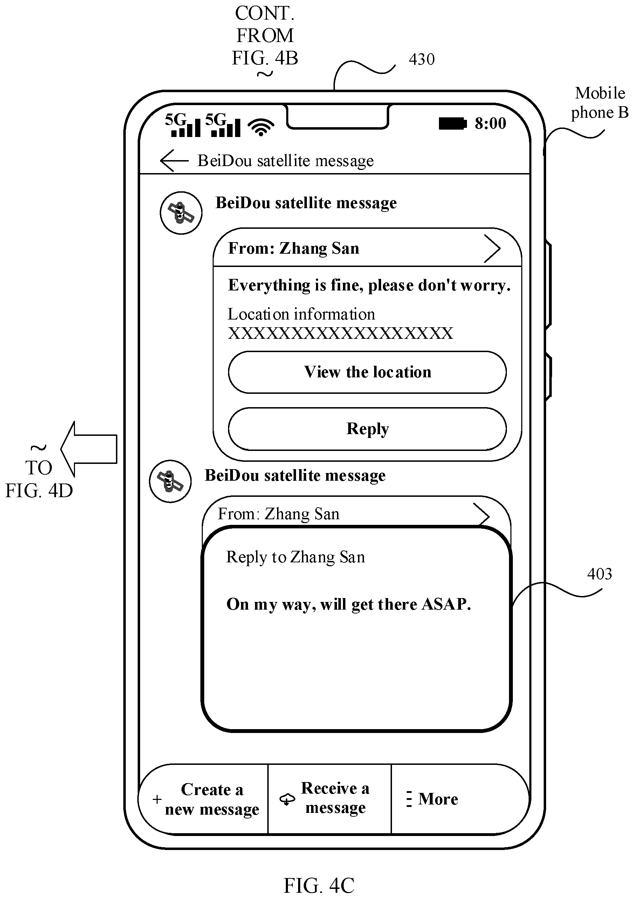

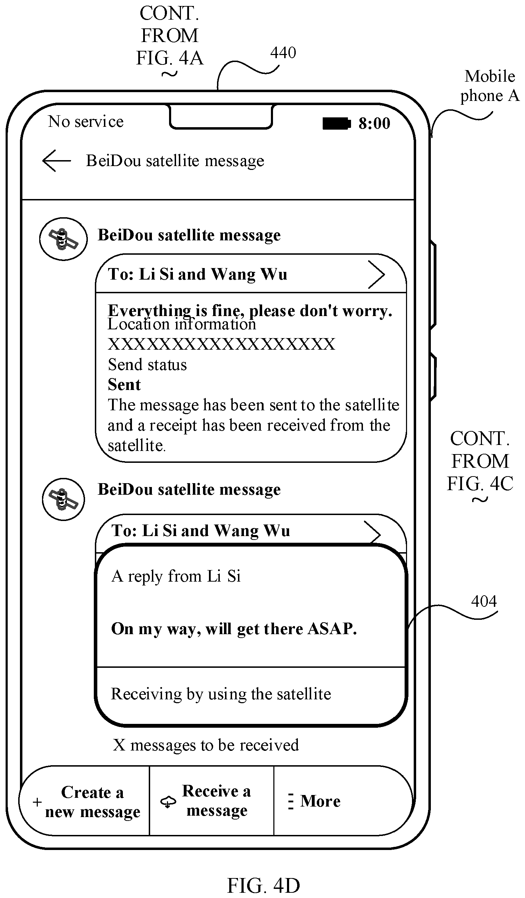

The mobile phone A 301 may be configured to send, in a network disconnection state, a BeiDou satellite message to the satellite 302 in a form of a BeiDou short packet. The BeiDou satellite message may include but is not limited to a recipient number, a message association identifier, and the like. The message association identifier may directly or indirectly indicate an ID of the BeiDou satellite message. The ID of the BeiDou satellite message may be used to determine an association relationship among a plurality of messages. For example, FIG. 4A to FIG. 4D are a schematic diagram of an interaction interface of a satellite message transmission method according to an embodiment of this application. FIG. 4A to FIG. 4D may include an interface 410 shown by the mobile phone A 301. The interface 410 may indicate a display interface existing after Zhang San sends a BeiDou satellite message to recipients Li Si and Wang Wu by using the mobile phone A 301, and may include a preview card 401 for sending the BeiDou satellite message. It should be noted that, in this embodiment of this application, an application for sending and receiving the BeiDou satellite message is not limited, for example, may be an instant messaging APP or a messaging APP. In addition, in this embodiment of this application, although the BeiDou satellite message is displayed in a form of a message card in FIG. 4A to FIG. 4D, in actual implementation, the BeiDou satellite message may alternatively be displayed in a form of text content or the like. This is not limited in this application.

The satellite 302 may be configured to: receive the BeiDou satellite message from the mobile phone A 301, and determine, based on a recipient number carried in the BeiDou satellite message, the server 303 corresponding to the recipient. Then, the satellite 302 is further configured to send the BeiDou satellite message to the server 303 corresponding to the recipient. The satellite 302 may send the BeiDou satellite message to the server 303 by using a BeiDou satellite ground information processing center (which may also be referred to as a "ground station" for short).

The server 303 may be configured to: receive the BeiDou satellite message sent by the satellite 302, and determine, based on the recipient number carried in the BeiDou satellite message, a terminal device corresponding to the recipient. For example, the terminal device may be the mobile phone B 304. For example, the server 303 may be further configured to parse the message association identifier carried in the BeiDou satellite message, to obtain the ID of the BeiDou satellite message. The server 303 may be configured to send, to the mobile phone B 304, the BeiDou satellite message that includes the ID of the BeiDou satellite message.

The mobile phone B 304 may be configured to receive the BeiDou satellite message sent by the server 303. The BeiDou satellite message may include the ID of the BeiDou satellite message. For example, FIG. 4A to FIG. 4D may further include an interface 420 shown by the mobile phone B 304. The interface 420 may indicate a display interface existing after the recipient Li Si receives the BeiDou satellite message from Zhang San by using the mobile phone B 304, and may include a preview card 402 for receiving the BeiDou satellite message. It can be learned from the interface 420 that the preview card 402 may include a "reply" control, and a user may reply to a message on the mobile phone A 301 by using the "reply" control.

The mobile phone B 304 may be further configured to reply to the received BeiDou satellite message in response to a touch operation of the user on the "reply" control. For example, FIG. 4A to FIG. 4D may further include an interface 430 shown by the mobile phone B 304. The interface 430 may indicate a reply interface of the recipient Li Si to the BeiDou satellite message from Zhang San. The reply interface may include a preview card 403 for replying to the BeiDou satellite message. In addition, based on a reply to the BeiDou satellite message from Zhang San, when being displayed, the preview card 403 may be further displayed, in an associated manner, with a combination of the preview card 402 shown in the interface 420. For example, the preview cards may be displayed in an overlay mode shown in the interface 430, so that the user may intuitively determine that there is a reply association relationship between two messages.

Then, the mobile phone B 304 may be further configured to send a reply message to the server 303. The reply message may carry the ID of the BeiDou satellite message, and indicate a BeiDou satellite message to which the reply message is replied.

The server 303 may be further configured to: receive the reply message from the mobile phone B 304, and store the reply message.

In some embodiments, in a scenario in which the mobile phone A301 is in a network disconnection state, due to a characteristic such as mobility of a BeiDou satellite, it is difficult for the BeiDou satellite to actively perform downlink communication. In a general scenario, after sending the BeiDou satellite message, the mobile phone A 301 may actively query, by using a letter query mechanism, the satellite 302 for whether there is a message to be received. Based on this, the mobile phone A 301 is further configured to send a letter download request message to the satellite 302. After receiving the letter download request message, the satellite may continue to send the letter download request message to the server 303. The letter download request may carry at least one of the recipient number and the message association identifier on the mobile phone A 301. For example, the recipient number on the mobile phone A 301 may be a number of Zhang San.

The server 303 may be further configured to: receive the letter download request message from the satellite 302, and query, based on the recipient number and/or the message association identifier that are/is on the mobile phone A301 and that are/is carried in the letter download request message, whether there is a corresponding message to be received. For example, after querying that there is a corresponding reply message, the server 303 returns the corresponding reply message to the satellite 302.

The satellite 302 is further configured to: receive the reply message returned by the server 303, and deliver the reply message to the mobile phone A 301. The reply message may carry a message association identifier. The message association identifier may directly or indirectly indicate the ID of the BeiDou satellite message. The ID of the BeiDou satellite message may be used to determine an association relationship among a plurality of messages.

The mobile phone A 301 may be configured to: receive the reply message delivered by the satellite 302, obtain the ID of the BeiDou satellite message based on the message association identifier carried in the reply message, and display an interface based on the ID of the BeiDou satellite message. For example, FIG. 4A to FIG. 4D may further include an interface 440 shown by the mobile phone A 301. The interface 440 may indicate a display interface existing after Zhang San receives the reply message of Li Si. The display interface may include a preview card 404 of the received reply message. Based on the ID of the BeiDou satellite message carried in the reply message, when being displayed, the preview card 404 may be further displayed, in an associated manner, with a combination of the preview card 401 shown in the interface 410. For example, the preview cards may be displayed in an overlay mode shown in the interface 440, so that the user may intuitively determine that there is a reply association relationship between two messages.

It should be noted that the touch operation in the foregoing descriptions may be implemented in, but is not limited to, the following manners: a tap operation, a double-tap operation, a touch and hold operation, a voice instruction, or the like. During specific implementation, the touch operation may be implemented based on a configuration form of the terminal device. In addition, the network connection state in the foregoing scenarios may include a cellular network, a Wi-Fi network, and the like. It may be understood that, in a network disconnection state, the terminal device may perform communication by using a BeiDou satellite network.

Based on the foregoing content of descriptions of the interface processing effect that can be achieved by using the method provided in embodiments of this application, the following describes an implementation process of the satellite message transmission method provided in this application, to describe how to achieve the interface processing effect in FIG. 4A to FIG. 4D described above by using the method provided in this application. In this way, a BeiDou satellite message may be replied to and a reply message may be received. This may meet more BeiDou communication application scenarios and provide better communication assurance for a user.

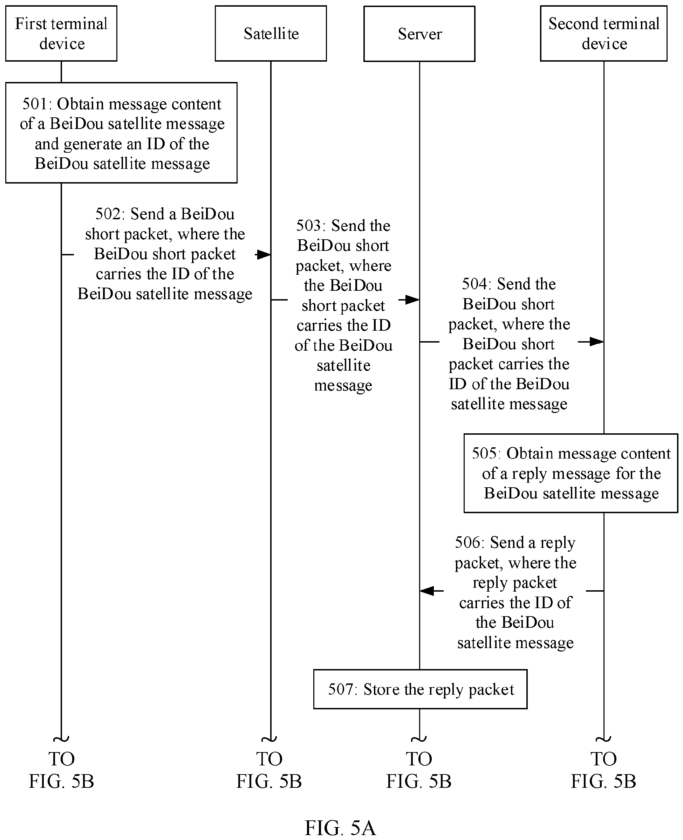

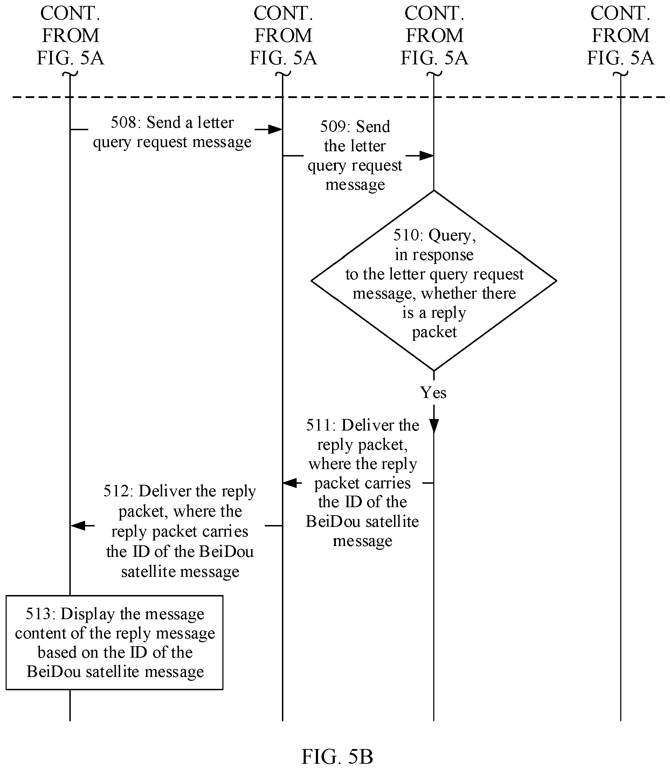

In an optional embodiment, FIG. 5A and FIG. 5B are a schematic flowchart of a satellite message transmission method according to an embodiment of this application. The procedure may include the following steps.

Step 501: A first terminal device obtains message content of a BeiDou satellite message and generates an ID of the BeiDou satellite message.

In a possible embodiment, the first terminal device generates the ID of the BeiDou satellite message by using current timestamp information. For example, the current timestamp information may be determined based on coordinated universal time (universal time coordinated, UTC). Usually, the UTC is time of a second (S)-level unit, and UTC time of the terminal device may be calibrated by using a BeiDou satellite. The BeiDou satellite message usually needs to be manually edited by a user. Therefore, to reduce a calculation amount, the BeiDou satellite message may be considered in a minute-level unit. In addition, due to a use limitation and a resource limitation of the BeiDou satellite, and an application scenario of the BeiDou satellite message (usually used in an urgent network disconnection state), a storage validity period of the BeiDou satellite message may be preset. For example, for the ID of the BeiDou satellite message generated based on the UTC, refer to the following Formula 1:

$$(ID)_B = (ID)_D = \frac{UTC_{N1}}{60} \% (X * 24 * 60 + C) \qquad \text{Formula 1}$$

In Formula 1, $(ID)_B$ may represent an ID of the BeiDou satellite message that is converted into a binary value; $(ID)_D$ may represent a decimal ID of the BeiDou satellite message; $UTC_{N1}$ may represent current UTC existing when the first terminal device generates the ID of the BeiDou satellite message; $\frac{UTC_{N1}}{60}$ may be used to represent converting second-level UTC into minute-level UTC time; % may be used to represent performing a modulo operation; X may be used to represent the preset storage validity period; and C may be used to represent an integer greater than or equal to 0, and may be a user-defined constant to avoid a conflict of IDs of the BeiDou satellite message. For example, in this embodiment of this application, X is seven days. In actual implementation, user-defined configuration may be performed. When X is 7, (X*24*60)=10800. After $(ID)_D$ is converted into $(ID)_B$, at least 14 bits may be occupied. Compared with a long-type identifier (usually occupying 64 bits) generated by using a general technology, this may reduce occupation of space of a BeiDou short packet.

It may be understood that, based on the ID of the BeiDou satellite message obtained through calculation in the manner shown in Formula 1, when X is 7, the ID of the BeiDou satellite message may not be reused within seven days. Therefore, a problem of a message association error does not occur. In addition, after generating the ID of the BeiDou satellite message, the first terminal device may simultaneously enable timing for the BeiDou satellite message. When the timing reaches a preset duration threshold, the BeiDou satellite message may be cleared. For example, the preset duration threshold may be $(X * 24 * 60 + C)$, $X * 24 * 60$, or the like. When X is 7, the BeiDou satellite message may be stored for seven days. Therefore, the ID of the BeiDou satellite message corresponding to the BeiDou satellite message may not affect a value of an ID of a BeiDou satellite message in a next cycle.

Step 502: The first terminal device sends the BeiDou short packet (which may also be referred to as a "BeiDou satellite message" in this embodiment of this application) to a satellite, where the BeiDou short packet carries the ID of the BeiDou satellite message. For example, the first terminal device may perform framing based on the message content of the BeiDou satellite message and the ID of the BeiDou satellite message that are obtained in step 501, and send the framed content in a form of the BeiDou short packet to the satellite. In addition, it may be understood that the BeiDou short packet may further carry but is not limited to one or more recipient numbers, location information of the first terminal device, and the like.

Step 503: The satellite sends the BeiDou short packet to a server, where the BeiDou short packet carries the ID of the BeiDou satellite message. For example, the satellite may send the BeiDou short packet to the server by using a BeiDou satellite ground information processing center. It may be understood that the satellite or the BeiDou satellite ground information processing center may determine, based on one or more recipient numbers included in the BeiDou short packet, one or more servers corresponding to the one or more recipients. The plurality of recipients may correspond to a same server, or may correspond to different servers. This is not limited in this application.

Step 504: The server sends the BeiDou short packet to a second terminal device, where the BeiDou short packet carries the ID of the BeiDou satellite message. For example, the server may determine, based on the recipient number in the BeiDou short packet, a second terminal device corresponding to the recipient. It may be understood that, in FIG. 5A and FIG. 5B, a second terminal device corresponding to one recipient is used as an example. In actual implementation, the second terminal device may be determined based on the recipient included in the BeiDou short packet. Step 505: The second terminal device obtains message content of a reply message for the BeiDou satellite message. For example, as shown in the interface 420 in FIG. 4A to FIG. 4D, the second terminal device may display the received BeiDou satellite message to the user by using a display interface, and further provide, for the user, a control configured to reply to the BeiDou satellite message. Then, for example, as shown in the interface 420 in FIG. 4A to FIG. 4D, the second terminal device may obtain, in response to a touch operation of the user in replying to the BeiDou satellite message, the message content of the reply message for the BeiDou satellite message.

Step 506: The second terminal device sends the reply packet (which may also be referred to as a "reply message" in this embodiment of this application) to the server, where the reply packet carries the ID of the BeiDou satellite message. For example, the second terminal device may perform framing based on the message content of the reply message obtained in step 505 and the ID of the BeiDou satellite message received in step 504, to obtain the reply packet.

Step 507: The server stores the reply packet. It may be understood that, when the reply packet is received based on the first terminal device in a network disconnection state, a letter query mechanism needs to be used for an active query, and the server may first store the reply packet. In addition, to avoid occupation and waste of storage resources, the server may further set preset storage duration. For example, the preset storage duration may be seven days.

Step 508: The first terminal device sends a letter query request message to the satellite. The letter query request message may include a recipient number and/or the ID of the BeiDou satellite message that are/is on the first terminal device, and the recipient number and/or the ID of the BeiDou satellite message that are/is on the first terminal device may be used by the server to query whether there is a reply message to be received by the first terminal device.

Step 509: The satellite sends the letter query request message to the server. For example, the satellite may alternatively send the letter query request message by using the BeiDou satellite ground information processing center. Similarly, the letter query request message may include the recipient number and/or the ID of the BeiDou satellite message that are/is on the first terminal device, and the recipient number and/or the ID of the BeiDou satellite message that are/is on the first terminal device may be used by the server to query whether there is a reply message to be received by the first terminal device.

Step 510: The server queries, in response to the letter query request message, whether there is a reply packet. For example, the server may query, based on the recipient number and/or the ID of the BeiDou satellite message that are/is on the first terminal device, whether there is a reply packet, in storage, corresponding to the recipient number and/or the ID of the BeiDou satellite message that are/is on the first terminal device. When it is determined that there is a reply packet, proceed to perform the following step 511.

Step 511: The server sends the reply packet to the satellite, where the reply packet carries the ID of the BeiDou satellite message. For example, the server may send the reply packet to the satellite by using the BeiDou satellite ground information processing center. It may be understood that, when the server or the BeiDou satellite ground information processing center sends the reply packet to the satellite, the reply message may be sent in a form of the BeiDou short packet by using a BeiDou satellite channel, so that uplink communication of the BeiDou satellite may be implemented.

Step 512: The satellite delivers the reply packet to the first terminal device, where the reply packet carries the ID of the BeiDou satellite message.

Step 513: The first terminal device displays the message content of the reply message based on the ID of the BeiDou satellite message. For example, in the interface 440 shown in FIG. 4A to FIG. 4D, the mobile phone A may display, in a form of the preview card 404, message content obtained after the reply message is decoded. It may be learned from the preview card 404 that the mobile phone A may display a plurality of messages with a same ID of the BeiDou satellite message in an associated manner. For example, an overlay display mode shown in the interface 440 is used.

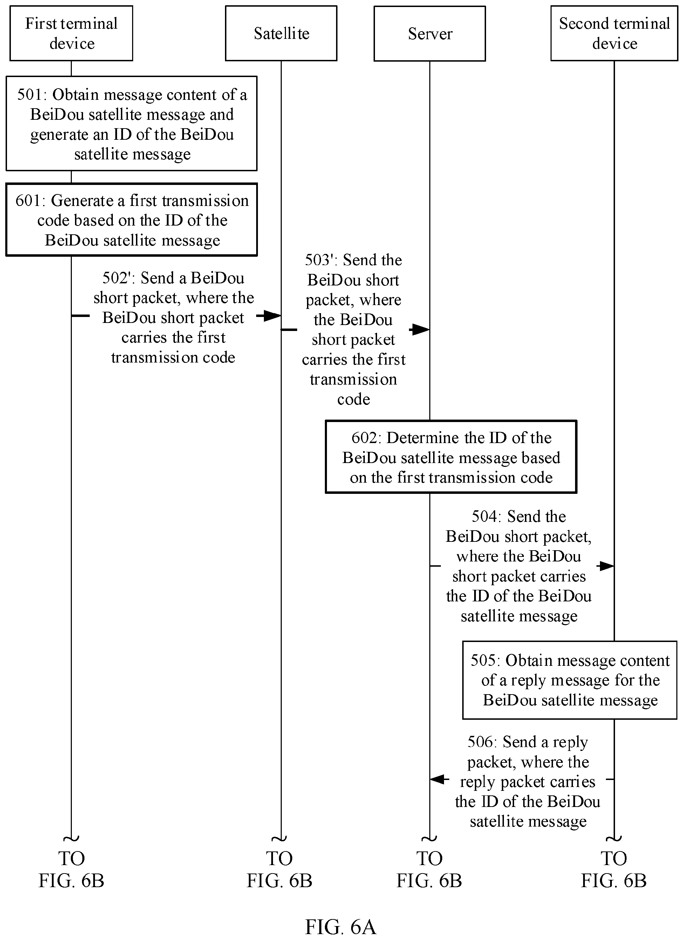

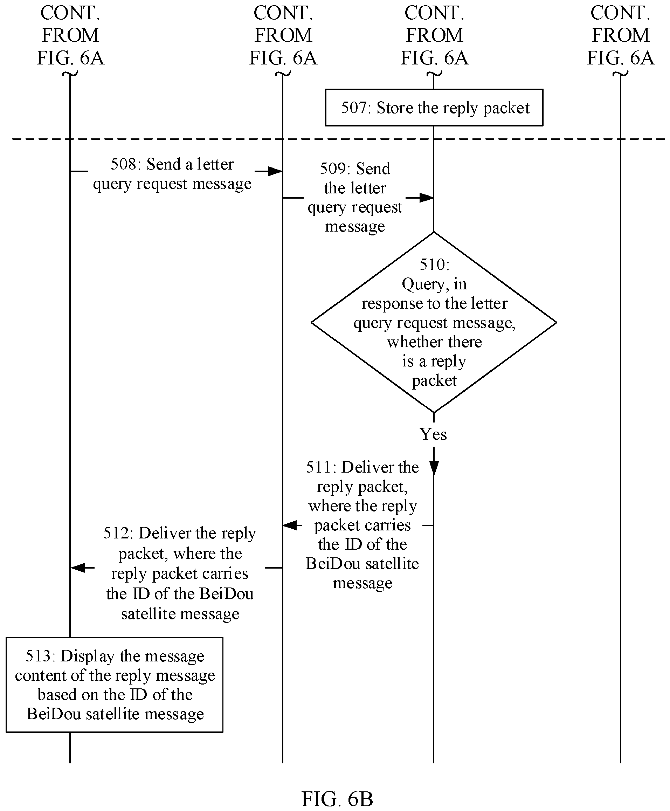

In another optional embodiment, FIG. 6A and FIG. 6B are another schematic flowchart of a satellite message transmission method according to an embodiment of this application. The procedure may include the following steps.

Step 501: A first terminal device obtains message content of a BeiDou satellite message and generates an ID of the BeiDou satellite message. For the ID of the BeiDou satellite message generated by the first terminal device, refer to content described in FIG. 5A and FIG. 5B. Details are not described herein again.

Step 601: The first terminal device generates a first transmission code based on the ID of the BeiDou satellite message.

In a possible implementation, the ID of the BeiDou satellite message may be determined by using timestamp information (referred to as first timestamp information for ease of differentiation in the following embodiments) existing when the first terminal device generates the ID of the BeiDou satellite message. In addition, a maximum transmission period required for sending the BeiDou satellite message from the first terminal device to a server does not exceed Y minutes (min). For example, Y may be 1 min, 2 min, 3 min, 4 min, or the like. During specific implementation, the time may be set by a user based on an actual service situation. One bit is occupied when 1 min is converted into a binary value, and two bits are occupied when 2 min to 4 min are converted into a binary value. Therefore, compared with space occupied by the ID of the BeiDou satellite message, secondary compression may be implemented by using the transmission code, so that occupation of a message capacity of the BeiDou short packet may be further reduced.

Based on this, in addition to generating the ID of the BeiDou satellite message based on the first timestamp information, the first terminal device may further generate the first transmission code based on the first timestamp information. In this way, the first transmission code may be transmitted in the BeiDou short packet. It may be understood that the first transmission code may indicate the first timestamp information, to further obtain the ID of the BeiDou satellite message through calculation by using the first timestamp information.

For example, for that the first terminal device generates the first transmission code based on the first timestamp information, refer to the following Formula 2-1:

$$(TC1)_B = (TC1)_D = \frac{UTC_{N1}}{60} \% Y \qquad \text{Formula 2-1}$$

In Formula 2-1, $(TC1)_B$ may represent a first transmission code that is converted into a binary value; $(TC1)_D$ may represent a decimal first transmission code; $UTC_{N1}$ may represent current UTC (referred to as first UTC for ease of differentiation in the following embodiments) existing when the first terminal device generates the ID of the BeiDou satellite message; $\frac{UTC_{N1}}{60}$ may be used to represent converting second-level UTC into minute-level UTC time; % may be used to represent performing a modulo operation; and Y may be used to represent a pre-configured maximum transmission period for sending the BeiDou short packet from the first terminal device to the server for receiving.

For example, Y is 4 min. A value of $(TC1)_D$ may be 0, 1, 2, or 3, and correspondingly, a value of $(TC1)_B$ is 00, 01, 10, or 11.

Step 502': The first terminal device sends the BeiDou short packet to the satellite, where the BeiDou short packet carries the first transmission code.

Step 503': The satellite sends the BeiDou short packet to the server, where the BeiDou short packet carries the first transmission code.

It may be understood that step 502' is similar to step 502 described in FIG. 5A and FIG. 5B, and step 503' is similar to step 503 described in FIG. 5A and FIG. 5B. A difference lies in that the BeiDou short packet transmitted in step 502' and step 502' carries the first transmission code. Step 602: The server determines the ID of the BeiDou satellite message based on the first transmission code.

Corresponding to that the first terminal device generates the first transmission code based on the first timestamp information, the server may determine the first timestamp information according to a same rule. For example, the server may generate a second transmission code based on current timestamp information (referred to as second timestamp information for ease of differentiation in the following embodiments) existing when the server receives the BeiDou short packet. Refer to the following Formula 2-2:

$$(TC2)_B = (TC2)_D = \frac{UTC_{N2} - y}{60} \% Y \qquad \text{Formula 2-2}$$

In Formula 2-2, $(TC2)_B$ may represent a second transmission code that is converted into a binary value; $(TC2)_D$ may represent a decimal second transmission code; $UTC_{N2}$ may represent corresponding UTC (referred to as second UTC for ease of differentiation in the following embodiments) existing when the server receives the BeiDou satellite message; $\frac{UTC_{N2}}{60}$ may be used to represent converting second-level UTC into minute-level UTC time; % may be used to represent performing a modulo operation; and Y may be used to represent a pre-configured maximum transmission period for sending the BeiDou short packet from the first terminal device to the server for receiving. y may represent a variable constant, and may be set to 0 during initial calculation on the server.

For example, Y is 4 min. A value of $(TC2)_D$ may be 0, 1, 2, or 3, and correspondingly, a value of $(TC2)_B$ is 00, 01, 10, or 11.

Further, the server determines whether the second transmission code is the same as the first transmission code. If the second transmission code is the same as the first transmission code, it may be determined that $UTC_{N2}$ is the same as $UTC_{N1}$. If the second transmission code and the first transmission code are different, it may be determined that $UTC_{N2}$ and $UTC_{N1}$ are different. In this case, the server may move $UTC_{N2}$ back by 1 min sequentially to continue the calculation. For example, y in Formula 2-2 may be set to 1, and the second transmission code is re-obtained through calculation, until the second transmission code is the same as the first transmission code, at which point corresponding timestamp information is found. It should be noted that, Formula 2-2 is only an optional example, and is not used to limit the actual formula used during specific calculation in the implementation of this application. For example, if the first UTC may be 00:03, the first transmission code is 3, the second UTC is 00:04, and the second transmission code obtained by the server through calculation at the first time is 0, it may be determined that the second transmission code and the first transmission code are different. Then, the server may move back by 1 min (that is, 00:03) based on 00:04 to perform the second calculation, so that the second transmission code is 3. In this case, the second transmission code is the same as the first transmission code. Therefore, it may be determined that the first UTC is obtained by the server. The server generates the ID of the BeiDou satellite message based on the obtained first UTC in a manner that is the same as the manner in which the first terminal device generates the ID of the BeiDou satellite message. For example, the server may generate the ID of the BeiDou satellite message according to Formula 1.

Based on the foregoing description content, the ID of the BeiDou satellite message is indirectly indicated in the BeiDou short packet in a form of the transmission code. In a scenario in which an association relationship among a plurality of messages may be determined based on the ID of the BeiDou satellite message, occupation of a message capacity of the BeiDou short packet may be further reduced, and impact on actual content carried in the BeiDou short packet may be avoided. Step 504: The server sends the BeiDou short packet to a second terminal device, where the BeiDou short packet carries the ID of the BeiDou satellite message.

It should be noted that, in some other optional embodiments, the second terminal device may also determine the ID of the BeiDou satellite message based on the first transmission code. In this embodiment, the BeiDou short packet received by the second terminal device from the server may carry the first transmission code.

Step 505: The second terminal device obtains message content of a reply message for the BeiDou satellite message.

Step 506: The second terminal device sends a reply packet to the server, where the reply packet carries the ID of the BeiDou satellite message.

Step 507: The server stores the reply packet.

Step 508: The first terminal device sends a letter query request message to the satellite.

Step 509: The satellite sends the letter query request message to the server.

Step 510: The server queries, in response to the letter query request message, whether there is a reply packet.

Step 511: The server sends the reply packet to the satellite, where the reply packet carries the ID of the BeiDou satellite message.

Step 512: The satellite delivers the reply packet to the first terminal device, where the reply packet carries the ID of the BeiDou satellite message.

Step 513: The first terminal device displays the message content of the reply message based on the ID of the BeiDou satellite message.

For an implementation process of step 504 to step 513, refer to content described in FIG. 5A and FIG. 5B. Details are not described herein again.

According to the method provided in this embodiment of this application, the ID of the BeiDou satellite message is generated based on the timestamp information, so that a message capacity of the BeiDou short packet occupied by the ID of the BeiDou satellite message may be reduced. Alternatively, the ID of the BeiDou satellite message and the transmission code are generated based on the timestamp information, so that occupation of a message capacity of the BeiDou short packet may be reduced. In addition, a plurality of messages may be associated by using the ID of the BeiDou satellite message, so that a user may more intuitively determine a relationship among messages.

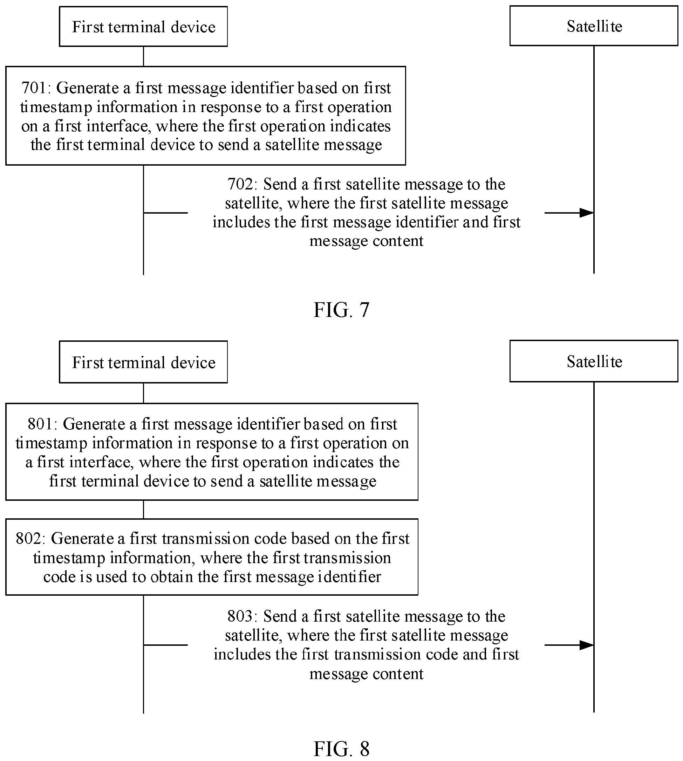

In some other implementations, FIG. 7 is a schematic flowchart of a satellite message transmission method according to an embodiment of this application. The procedure may include the following steps.

Step 701: A first terminal device generates a first message identifier based on first timestamp information in response to a first operation on a first interface, where the first operation indicates the first terminal device to send a satellite message.

Step 702: The first terminal device sends a first satellite message to a satellite, where the first satellite message includes the first message identifier and first message content.

In some other implementations, FIG. 8 is a schematic flowchart of a satellite message transmission method according to an embodiment of this application. The procedure may include the following steps.

Step 801: A first terminal device generates a first message identifier based on first timestamp information in response to a first operation on a first interface, where the first operation indicates the first terminal device to send a satellite message.

Step 802: The first terminal device generates a first transmission code based on the first timestamp information, where the first transmission code is used to obtain the first message identifier.

Step 803: The first terminal device sends a first satellite message to a satellite, where the first satellite message includes the first transmission code and first message content.

Based on the foregoing embodiments, this application further provides a terminal device. The terminal device includes a plurality of functional modules. The plurality of functional modules interact with each other to implement functions performed by the terminal device in the methods described in embodiments of this application. The plurality of functional modules may be implemented based on software, hardware, or a combination of software and hardware, and the plurality of functional modules may be randomly combined or divided based on a specific implementation. For example, step 701 and step 702 performed by the first terminal device in the embodiment shown in FIG. 7 are performed. Alternatively, step 801 to step 803 performed by the first terminal device in the embodiment shown in FIG. 8 may be further performed.

Based on the foregoing embodiments, this application further provides a terminal device. The terminal device includes at least one processor and at least one memory. The at least one memory stores computer program instructions. When the terminal device runs, the at least one processor performs functions performed by the terminal device in the methods described in embodiments of this application. For example, step 701 and step 702 performed by the first terminal device in the embodiment shown in FIG. 7 are performed. Alternatively, step 801 to step 803 performed by the first terminal device in the embodiment shown in FIG. 8 may be further performed.

Based on the foregoing embodiments, this application further provides a computer program product. The computer program product includes a computer program (which may also be referred to as code or instructions). When the computer program runs, a computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory. The memory is configured to store a program and data that are necessary for the computer apparatus. The chip system may include a chip, or may include a chip and another discrete component. A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or any other programmable data processing device, so that a series of operations and steps are performed on the computer or any other programmable device, to generate computer-implemented processing. Therefore, the instructions executed on the computer or any other programmable device provide steps for implementing a specific function in one or more processes in the flowcharts and/or in one or more blocks in the block diagrams.

It is clearly that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A satellite message transmission method, comprising:

    generating, by a first terminal device, a first message identifier based on first timestamp information in response to a first operation on a first interface, wherein the first operation indicates the first terminal device to send a satellite message; and
    sending, by the first terminal device, a first satellite message to a satellite, wherein the first satellite message comprises the first message identifier and first message content.

2. The method according to claim 1, wherein the generating a first message identifier based on first timestamp information comprises:

    performing modulo processing on the first timestamp information by using first preset duration, to obtain a modulo result; and
    generating the first message identifier based on the modulo result.

3. The method according to claim 2, wherein the generating the first message identifier based on the modulo result comprises:
    using the modulo result as the first message identifier.

4. The method according to any one of claims 1 to 3, wherein the method further comprises:

    receiving, by the first terminal device, a second satellite message sent by the satellite, wherein the second satellite message comprises a second message identifier and second message content, the second message identifier is the same as the first message identifier, and the second message content is reply content of the first message content; and
    displaying, by the first terminal device, a second interface based on the second satellite message, wherein the second message content and the first message content are displayed in an associated manner in the second interface.

5. The method according to claim 4, wherein before the receiving, by the first terminal device, a second satellite message sent by the satellite, the method further comprises:
sending, by the first terminal device, a first request message to the satellite in response to a second operation, wherein the first request message is used to request to obtain a satellite message to be received by the first terminal device.

6. The method according to any one of claims 1 to 5, wherein the first timestamp information is current coordinated universal time UTC obtained by the first terminal device in response to the first operation.

7. The method according to any one of claims 1 to 6, wherein the first satellite message is a BeiDou satellite message.

8. A satellite message transmission method, comprising:

generating, by a first terminal device, a first message identifier based on first timestamp information in response to a first operation on a first interface, wherein the first operation indicates the first terminal device to send a satellite message;
generating, by the first terminal device, a first transmission code based on the first timestamp information, wherein the first transmission code is used to obtain the first message identifier; and
sending, by the first terminal device, a first satellite message to a satellite, wherein the first satellite message comprises the first transmission code and first message content.

9. The method according to claim 8, wherein the generating a first message identifier based on first timestamp information comprises:

performing modulo processing on the first timestamp information by using first preset duration, to obtain a first modulo result; and
generating the first message identifier based on the first modulo result.

10. The method according to claim 9, wherein the generating the first message identifier based on the first modulo result comprises:
using the first modulo result as the first message identifier.

11. The method according to any one of claims 8 to 10, wherein the generating a first transmission code based on the first timestamp information comprises:

performing modulo processing on the first timestamp information by using second preset duration, to obtain a second modulo result; and
generating the first transmission code based on the second modulo result.

12. The method according to claim 11, wherein the generating the first transmission code based on the second modulo result comprises:
using the second modulo result as the first transmission code.

13. The method according to any one of claims 8 to 12, wherein the method further comprises:

receiving, by the first terminal device, a second satellite message sent by the satellite, wherein the second satellite message comprises a second message identifier and second message content, the second message identifier is the same as the first message identifier, and the second message content is reply content of the first message content; and
displaying, by the first terminal device, a second interface based on the second satellite message, wherein the second message content and the first message content are displayed in an associated manner in the second interface.

14. The method according to claim 13, wherein before the receiving, by the first terminal device, a second satellite message sent by the satellite, the method further comprises:
sending, by the first terminal device, a first request message to the satellite in response to a second operation, wherein the first request message is used to request to obtain a satellite message to be received by the first terminal device.

15. The method according to claim 9, wherein the first preset duration is greater than or equal to preset storage duration of the satellite message.

16. The method according to claim 11, wherein the second preset duration is greater than or equal to maximum duration required for transmitting the satellite message from the first terminal device to a server.

17. A satellite message transmission method, comprising:

receiving, by a server, a first satellite message from a first terminal device by using a satellite, wherein the first satellite message comprises a first transmission code and first message content, and the first transmission code is used to obtain the first message identifier;
obtaining, by the server, first timestamp information based on second timestamp information and the first transmission code, wherein the first timestamp is earlier than the second timestamp;
obtaining, by the server, the first message identifier based on the first timestamp information; and
sending, by the server, a first message to a second terminal device, wherein the first message comprises the first message identifier and the first message content.

18. The method according to claim 17, wherein the method further comprises:

receiving, by the server, a second message sent by the second terminal device, wherein the second message comprises a second message identifier and second message content, the second message identifier is the same as the first message identifier, and the second message content is reply content of the first message content; and
sending, by the server, a second satellite message to the satellite, wherein the second satellite message comprises the second message identifier and the second message content.

19. The method according to claim 17 or 18, wherein the obtaining, by the server, first timestamp information based on second timestamp information and the first transmission code comprises:

generating, by the server, a second transmission code based on the second timestamp information; and
when it is determined that the second transmission code is the same as the first transmission code, determining that the first timestamp information is the second timestamp information; or
when it is determined that the second transmission code is different from the first transmission code, generating a transmission code based on timestamp information that is earlier than the second timestamp information by M preset time intervals, until third timestamp information corresponding to a transmission code that is the same as the first transmission code is determined, and determining that the first timestamp information is the third timestamp information, wherein M is a positive integer sequentially obtained in ascending order, the preset time interval is less than or equal to first preset duration, and the first preset duration is preset transmission duration for sending the first satellite message from the first terminal device to the server for receiving.

20. A terminal device, comprising at least one processor, wherein the at least one processor is coupled to at least one memory, and the at least one processor is configured to read a computer program stored in the at least one memory, to perform the method according to any one of claims 1 to 7, or the method according to any one of claims 8 to 16 is performed.

21. A server, comprising at least one processor, wherein the at least one processor is coupled to at least one memory, and the at least one processor is configured to read a computer program stored in the at least one memory, to perform the method according to any one of claims 17 to 19.

22. A satellite message transmission system, wherein the system comprises the terminal device according to claim 20 and the server according to claim 21.

23. A computer-readable storage medium, wherein the computer-readable storage medium stores instructions, and when the instructions are run on a computer, the computer is enabled to perform the method according to any one of claims 1 to 7, or perform the method according to any one of claims 8 to 16.

24. A computer program product comprising instructions, wherein when the computer program product runs on a computer, the computer is enabled to perform the method according to any one of claims 1 to 7, or perform the method according to any one of claims 8 to 16.

200

Terminal device

210 — RF circuit ← → Wi-Fi module — 290

230 — Processor

220 — Power supply ← →

Communication interface — 280

240 — Memory ← →

270

Audio circuit

272 Speaker

Microphone

271

Input unit

Touch panel — 251

Another input device — 252

250

Display unit

Display panel — 261

260

FIG. 1

| Application layer | UI | Camera | Settings | Skin module |
| --- | --- | --- | --- | --- |
| | Memo | WLAN | Music | Call |
| | Messaging | Bluetooth | Video | ... |

| Application framework layer | Activity manager | Window manager | Content provider |
| --- | --- | --- | --- |
| | Phone manager | View system | Notification manager |
| | Resource manager | ... | |

| System library | Surface manager | Three-dimensional graphics processing library | Runtime |
| --- | --- | --- | --- |
| | Two-dimensional graphics engine | Media framework | ... |

| Kernel layer | Display driver | Camera driver | |
| --- | --- | --- | --- |
| | Audio driver | Sensor driver | ... |

| Hardware layer | Acceleration sensor | Gravity sensor | Touch sensor |
| --- | --- | --- | --- |

FIG. 2

FIG. 3

410

No service　　　　　　　　■ 8:00

← BeiDou satellite message

**BeiDou satellite message**

**Usage instructions**
For emergency communication in
areas without mobile data and
WLAN coverage.

**BeiDou satellite message**

**To: Li Si and Wang Wu** ＞

**Everything is fine, please don't worry.**
Location information
XXXXXXXXXXXXXXXXXX
Send status
**Sent**
The message has been sent to the satellite
and a receipt has been received from the
satellite.

Mobile
phone A

⇨ ~
TO
FIG. 4B

401

+ **Create a
new message** | ⇔ **Receive a
message** | ⋮ **More**

⇩ ~
TO
FIG. 4D

FIG. 4A

420

Mobile
phone B

5G 5G 📶 ■ 8:00

← BeiDou satellite message

**BeiDou satellite message**

From: Zhang San ⟩

**Everything is fine, please don't worry.**

Location information
XXXXXXXXXXXXXXXXXX

View the location

Reply

402

CONT.
FROM
FIG. 4A
~

+ **Create a
new message** | ⇔ **Receive a
message** | ⋮ **More**

TO
FIG. 4C

FIG. 4B

CONT.
FROM
FIG. 4B
~

430

Mobile
phone B

5G .ııl 5G .ııl 🛜          ▬ 8:00

← BeiDou satellite message

🛰 **BeiDou satellite message**

**From: Zhang San** ❯

**Everything is fine, please don't worry.**

Location information
XXXXXXXXXXXXXXXXXX

**View the location**

**Reply**

~
TO
FIG. 4D

🛰 **BeiDou satellite message**

From: Zhang San ❯

Reply to Zhang San

**On my way, will get there ASAP.**

403

+ **Create a new message**          ⌘ **Receive a message**          ⋮ **More**

FIG. 4C

CONT.
FROM
FIG. 4A

440

Mobile
phone A

No service　　　　　　■ 8:00

← BeiDou satellite message

BeiDou satellite message

To: Li Si and Wang Wu 〉

**Everything is fine, please don't worry.**
Location information
XXXXXXXXXXXXXXXXXX
Send status
**Sent**
The message has been sent to the satellite
and a receipt has been received from the
satellite.

BeiDou satellite message

CONT.
FROM
FIG. 4C

To: Li Si and Wang Wu 〉

A reply from Li Si

**On my way, will get there ASAP.**

Receiving by using the satellite

404

X messages to be received

| + Create a new message | ⇔ Receive a message | ⋮ More |

FIG. 4D

25

| First terminal device | Satellite | Server | Second terminal device |
|---|---|---|---|

501: Obtain message content of a BeiDou satellite message and generate an ID of the BeiDou satellite message

502: Send a BeiDou short packet, where the BeiDou short packet carries the ID of the BeiDou satellite message

503: Send the BeiDou short packet, where the BeiDou short packet carries the ID of the BeiDou satellite message

504: Send the BeiDou short packet, where the BeiDou short packet carries the ID of the BeiDou satellite message

505: Obtain message content of a reply message for the BeiDou satellite message

506: Send a reply packet, where the reply packet carries the ID of the BeiDou satellite message

507: Store the reply packet

TO
FIG. 5B

TO
FIG. 5B

TO
FIG. 5B

TO
FIG. 5B

FIG. 5A

CONT.
FROM
FIG. 5A

CONT.
FROM
FIG. 5A

CONT.
FROM
FIG. 5A

CONT.
FROM
FIG. 5A

508: Send a letter
query request message

509: Send
the letter
query request
message

510: Query,
in response
to the letter query request
message, whether there
is a reply
packet

Yes

511: Deliver the
reply packet,
where the reply
packet carries
the ID of the
BeiDou satellite
message

512: Deliver the reply
packet, where the
reply packet carries
the ID of the BeiDou
satellite message

513: Display the message
content of the reply message
based on the ID of the
BeiDou satellite message

FIG. 5B

| First terminal device | Satellite | Server | Second terminal device |

501: Obtain message content of a BeiDou satellite message and generate an ID of the BeiDou satellite message

601: Generate a first transmission code based on the ID of the BeiDou satellite message

502': Send a BeiDou short packet, where the BeiDou short packet carries the first transmission code

503': Send the BeiDou short packet, where the BeiDou short packet carries the first transmission code

602: Determine the ID of the BeiDou satellite message based on the first transmission code

504: Send the BeiDou short packet, where the BeiDou short packet carries the ID of the BeiDou satellite message

505: Obtain message content of a reply message for the BeiDou satellite message

506: Send a reply packet, where the reply packet carries the ID of the BeiDou satellite message

TO FIG. 6B    TO FIG. 6B    TO FIG. 6B    TO FIG. 6B

FIG. 6A

CONT. FROM FIG. 6A

CONT. FROM FIG. 6A

CONT. FROM FIG. 6A

CONT. FROM FIG. 6A

507: Store the reply packet

508: Send a letter query request message

509: Send the letter query request message

510: Query, in response to the letter query request message, whether there is a reply packet

Yes

511: Deliver the reply packet, where the reply packet carries the ID of the BeiDou satellite message

512: Deliver the reply packet, where the reply packet carries the ID of the BeiDou satellite message

513: Display the message content of the reply message based on the ID of the BeiDou satellite message

FIG. 6B

First terminal device

Satellite

701: Generate a first message identifier based on first timestamp information in response to a first operation on a first interface, where the first operation indicates the first terminal device to send a satellite message

702: Send a first satellite message to the satellite, where the first satellite message includes the first message identifier and first message content

FIG. 7

First terminal device

Satellite

801: Generate a first message identifier based on first timestamp information in response to a first operation on a first interface, where the first operation indicates the first terminal device to send a satellite message

802: Generate a first transmission code based on the first timestamp information, where the first transmission code is used to obtain the first message identifier

803: Send a first satellite message to the satellite, where the first satellite message includes the first transmission code and first message content

FIG. 8

**INTERNATIONAL SEARCH REPORT**

| International application No. |
| --- |
| **PCT/CN2024/070927** |

**A. CLASSIFICATION OF SUBJECT MATTER**

H04B 7/185(2006.01)i

According to International Patent Classification (IPC) or to both national classification and IPC

**B. FIELDS SEARCHED**

Minimum documentation searched (classification system followed by classification symbols)

IPC:H04B,H04W,H04L

Documentation searched other than minimum documentation to the extent that such documents are included in the fields searched

Electronic data base consulted during the international search (name of data base and, where practicable, search terms used)

CNTXT, ENTXT, CNABS, DWPI, CNKI: 北斗, 标识, 短报文, 短信, 发送, 时间戳, 卫星, 消息, 信息, 终端, ID, 取余, identi +, ID, satellite, Beidou, short, message, time, stamp, remainder

**C. DOCUMENTS CONSIDERED TO BE RELEVANT**

| Category* | Citation of document, with indication, where appropriate, of the relevant passages | Relevant to claim No. |
| --- | --- | --- |
| Y | CN 113708828 A (WUHAN XINGTU XINKE ELECTRONIC CO., LTD.) 26 November 2021 (2021-11-26) description, paragraphs [0026]-[0035], and figures 1-6 | 1, 4-7, 20, 23-24 |
| Y | CN 115706601 A (HUAWEI TECHNOLOGIES CO., LTD.) 17 February 2023 (2023-02-17) description, paragraphs [0152]-[0178], and figure 3 | 1, 4-7, 20, 23-24 |
| Y | CN 105933878 A (FUZHOU UNIVERSITY) 07 September 2016 (2016-09-07) description, paragraphs [0019]-[0034], and figure 1 | 1, 4-7, 20, 23-24 |
| A | CN 111934751 A (SOUTH-CENTRAL MINZU UNIVERSITY) 13 November 2020 (2020-11-13) entire document | 1-24 |
| A | US 6122671 A (AMSC SUBSIDIARY CORP.) 19 September 2000 (2000-09-19) entire document | 1-24 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 March 2024** | **21 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/070927** |

| Patent document cited in search report | | | Publication date (day/month/year) | Patent family member(s) | | | Publication date (day/month/year) |
| --- | --- | --- | --- | --- | --- | --- | --- |
| CN | 113708828 | A | 26 November 2021 | None | | | |
| CN | 115706601 | A | 17 February 2023 | WO | 2023011602 | A1 | 09 February 2023 |
| | | | | CA | 3226123 | A1 | 09 February 2023 |
| | | | | IN | 202437001562 | A | 26 January 2024 |
| CN | 105933878 | A | 07 September 2016 | None | | | |
| CN | 111934751 | A | 13 November 2020 | None | | | |
| US | 6122671 | A | 19 September 2000 | CA | 2240022 | A1 | 12 June 1997 |
| | | | | WO | 9721175 | A1 | 12 June 1997 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310288193